# EUROPEAN PATENT SPECIFICATION

(11) **EP 1 426 312 B1**
(45) Date of publication and mention of the grant of the patent: **01.02.2006**
(21) Application number: 03257557.3
(22) Date of filing: 01.12.2003
(51) Int. Cl.: B65G 17/34

(54) **Sorting conveyor**
Sortierförderer
Convoyeur de triage

(30) Priority: 03.12.2002 JP 2002351572; 23.04.2003 JP 2003119464
(43) Date of publication of application: 09.06.2004
(73) Proprietor: Sanki Engineering Co. Ltd, Chiyoda-ku, Tokyo 100-8484 (JP)
(72) Inventor: Hishinuma, Nobuya, Chiyoda-ku Tokyo 100-8484 (JP)
(74) Representative: Jehan, Robert

(56) References cited:
- WO-A-00/02802
- US-B1- 6 360 673

## Description

The present invention relates to a sorting conveyor preferably provided with a plurality of transporting units travelling on a transporting route shaped in a loop, and in the preferred embodiment to a sorting conveyor provided with a cross-sorter which includes a belt capable of being driven in a direction substantially perpendicular to the direction in which the transporting units are conveyed.

Various types of cross-belt sorters in which a large number of transporting units carried on a route shaped in a loop are connected, include an endless belt that is capable of being driven in a direction perpendicular to the travelling direction of the respective transporting units. Most transporting units are supported with four wheels, the units travel by the pulling of the link or the chain, and the endless belt for sorting the transporting units are by a motor using a current collector. However, more recently battery-driven operations are performed by accumulating electricity during transportation by using a free roller (for instance, see Japanese Patent Application Laid-Open Publication No. H1-139418). In addition, it is also known that those which comprises a power supply apparatus which include a power generator and a accumulator for driving an endless belt for sorting (for instance, see Japanese Patent Application Laid-Open Publication No. H10-35873).

These conventional techniques have a complicated structure, the noise during the operation is severe, and there is a risk of spark generation when using, for instance, a current collector. According to JP-H1-139418, as transporting units are supported by four travelling wheels; therefore, there are many working faces in which rails and frames comprised of sheet metal, which causes such problems that accuracy is difficult to be obtained, consequently, noise is easily generated. In addition, there occurs the matter that a timing belt between a wheel and a generator can be damaged by torque when power is generated. Further, when one timing belt is damaged, other timing belts are damaged continuously, thus there is the possibility that the system shuts down.

In conventional cross-belt sorters, the physical relationship of a travelling wheel and a link is inappropriate. For that reason, tracing at the curved part becomes inconsistent, which eventually causes a disturbance that is a reason for the cause of vibration and noise. Since one guide wheel travels along the rail in which angles are made opposite, it becomes necessary to provide gaps between the angles; thereby, vibrations are generated at the time when the guide wheel enters into curved rail part. In addition, the travelling guide rail has a channel shape therefore the travelling wheel comes into contact with a rail's upper flange when it reaches the entrance of the slope part, so that the travelling wheel counter-rotates suddenly resulting in one cause of vibration.

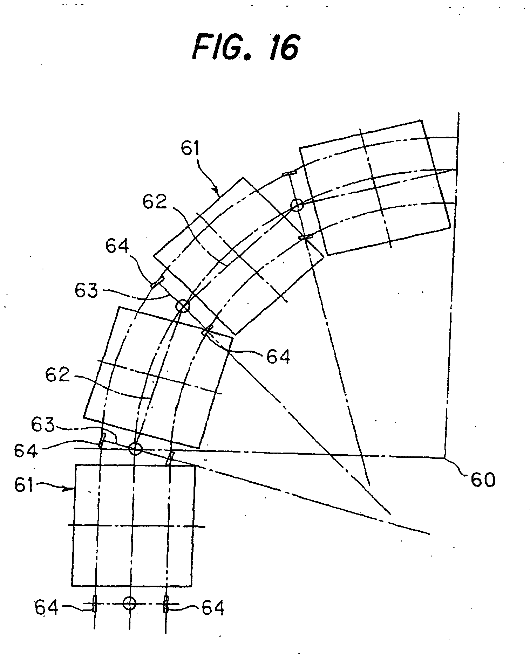

Further, in a transporting unit disclosed in JP-H10-35873, a chassis member is formed as a T-shape by combining a member of the longitudinal direction at the centre of a transverse member, and there are provided two wheels at both ends of the transverse member to travel. AS a result of this structure, the centre position of the transporting unit shifts from the focus point of the travelling wheels at the time of travelling the curved part, which tends to cause noise easily. That is, as shown in Fig. 16 of the accompanying drawings, there are provided travelling wheels 64, 64 at the both ends of a front part transverse member 63 of chassis 62 in transporting unit 61 to travel. Therefore, the position of the travelling wheels of the transporting unit 61 is shifted from the focus point 60 at the semicircular corner part of the travelling path, which prevents smooth travelling. Because the travelling wheels 64, 64 are arranged at the position with deviation from the focus point, in the case when a fixed wheel is utilised as the force in the thrust direction is applied for a long period, and so the wheels are prone to be damaged easily. When a rotatable caster type wheel is utilised, a bearing will stop moving because of the dust or the like. Furthermore, no consideration is given to an adjustment with regard to the elongation of the chassis. A similar sorting conveyor is also described in WO-A-00/02802.

The present invention seeks to provide an improved sorting conveyor.

The preferred embodiment provides a cross-belt conveyor which is capable of travelling smoothly in the semicircular corner part of the transporting route. Further more, it can provide a sorting conveyor comprising a cross-sorter which can travel in a stable manner without being affected by its installation level in such a manner that the guide wheel and the travelling wheel function as the coaster type guide wheel (i.e. pinching method) so as to make it possible to travel securely, as well as the main part of the cart is formed in a square cylindrical beam in order to have a torsion corresponding link.

According to an aspect of the present invention, there is provided a sorting conveyor in which a plurality of transporting units are connected to travel on a transporting route shaped in a loop and a conveyor for cross-sorting is provided on each transporting unit which is driven at a sorting position, wherein the transporting unit includes a chassis formed with a beam shaped link and a base fixed to the centre of the upper part of the link in the perpendicular direction, said transporting unit is connected at the front end and the rear end of the beam shaped link, respectively, said conveyor for cross-sorting is supported at the upper part of the base in such a manner that the cross-sorting conveyor can be driven reversibly in a direction substantially perpendicular to the travelling direction of the transporting unit, and a pair of travelling wheels which are mounted on both ends of the base come into contact with guide rails arranged on both sides of the transporting route, so that while travelling on the curved part of the transporting route, said travelling wheels travel along a circular locus whose centre is a focus point of the curved transporting route.

The conveyor for cross-sorting is preferably an endless belt conveyor or a driving roller conveyor. A connecting unit for linking the transporting unit is preferably attached to the front and rear ends of the beam shaped link, and the guide wheel is suspended from respective connecting units provided at the ends of the link so as to travel in such a manner in which to contact the centre rail of the centre of the transporting route.

Further, there may be provided level guide rails and oblique side rails at both sides of the transporting route, wherein the travelling wheels that are installed adjacent to both sides of the base come into contact with the level guide rails while coaster type guide wheels which are associated with the travelling wheels so as to pinch the guide rail member come into contact with the oblique side rails.

Moreover, the connecting unit with the same width as said link may be assembled while inserting a spacer at an end part of the link detachably, and the connecting unit supports a shaft part of the guide wheel guided by the centre rail with a spherical sliding bearing.

According to the above-described structure of the preferred embodiment, the endless belt transporting unit is supported by two travelling wheels in which the wheels are positioned at the focus point of the centre of semicircular in the curved part, and the link position is determined appropriately. As a result, it can travel without making noise which has been conventionally generated by the deviation of the centre. Further, friction driving is employed as a driven system, that is, a generating system in which a generator is rotated directly from the travelling rails through the free roller. A counter-measure is provided against the link chain elongation by inserting a spacer at a joint part of the connecting link so that when the length of the connecting link is elongated, such an elongated connecting link can be fixed easily to the prescribed length by removing any arbitrary spacer of link ends. Moreover, by providing a gap plate for supporting two wheels, it is possible to prevent pitching at the time when the transporting unit travels.

Embodiments of the present invention are described below, by way of example only, with reference to the accompanying drawings, in which:
Fig. 1 is a plan view of an embodiment of sorting conveyor comprising a cross-sorter;
Fig. 2 is a front view of the sorter of Fig. 1;
Fig. 3 is an enlarged right side view of the sorter of Fig. 1;
Fig. 4 is a lateral cross-sectional view of Fig. 3;
Fig. 5 is a plan view of an endless belt conveyor (cross-belt);
Fig. 6 is a plan view of a cart of a transporting unit;
Fig. 7 is a front view of the unit of Fig. 6;
Fig. 8 is an enlarged sectional view of a connecting part;
Fig. 9 is an end view of a beam shaped link;
Fig. 10 is a front view of a spacer disposed at the connecting part of Fig. 9;
Fig. 11 is a plan view of another embodiment of sorting conveyor comprising a roller conveyor provided on the travelling trucks which are connected for cross-direction;
Fig. 12 is an enlarged side view of the travelling truck shown in Fig. 11;
Fig. 13 is a plan view of a drive unit;
Fig. 14 is a sectional view along line A-A of Fig. 13;
Fig. 15 is a plan view showing a focus point on a curved travelling path of an embodiment of sorting conveyor of the present invention; and
Fig. 16 is a plan view showing deviation of the focus point on a curved travelling path of the conventional cross-belt sorter.

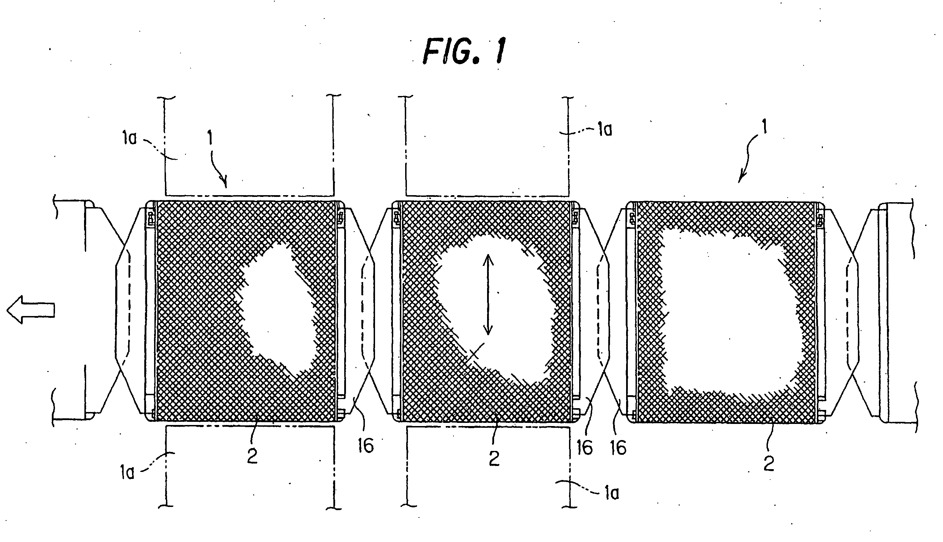

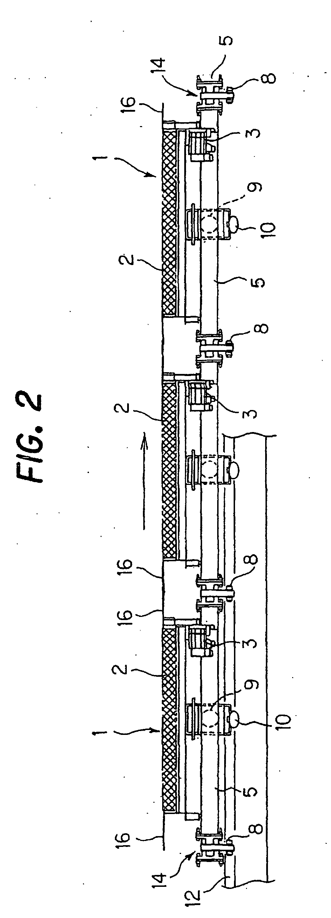

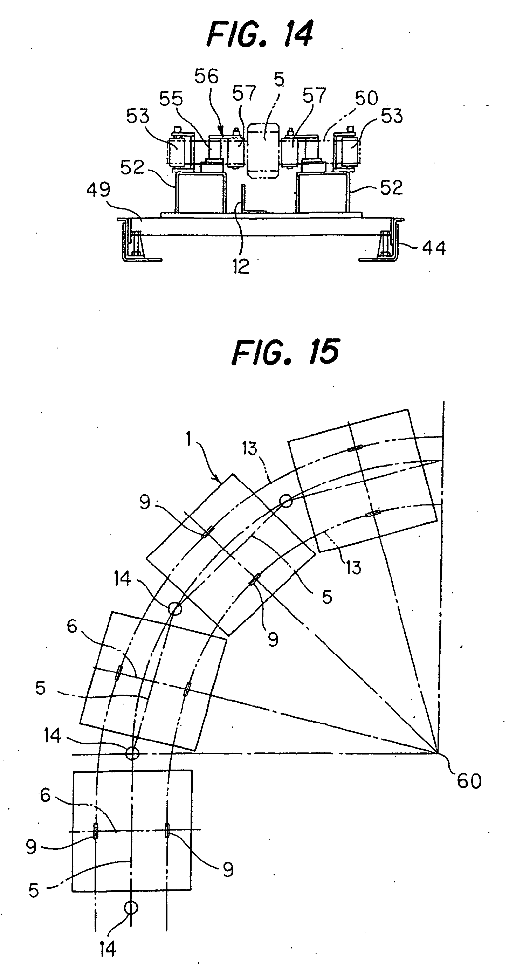

Fig. 1 is a plan view of a sorting conveyor comprising an embodiment of cross-sorter of the present invention. Fig. 2 is a front view of Fig. 1. In this embodiment a large number of transporting units 1, on which baggage is loaded, are connected and delivered along the transporting route shaped in a loop, and then the baggage is discharged to a sorting chute or conveyors 1a, while the conveyor for the cross-sorter comprising transporting units 1 is driven at the sorting position. The example of Fig. 1 shows a cross-belt sorter, in which an endless belt conveyor 2 is provided as the conveyor for cross-sorting. As described below with regard to Fig. 15, the transporting unit 1 travels along a circular excursion of the transporting route, whose centre is the focus point 60 at the time when it travels at the curved part.

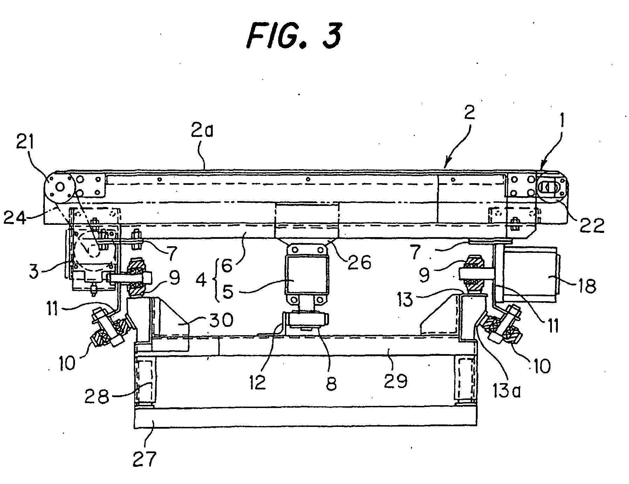

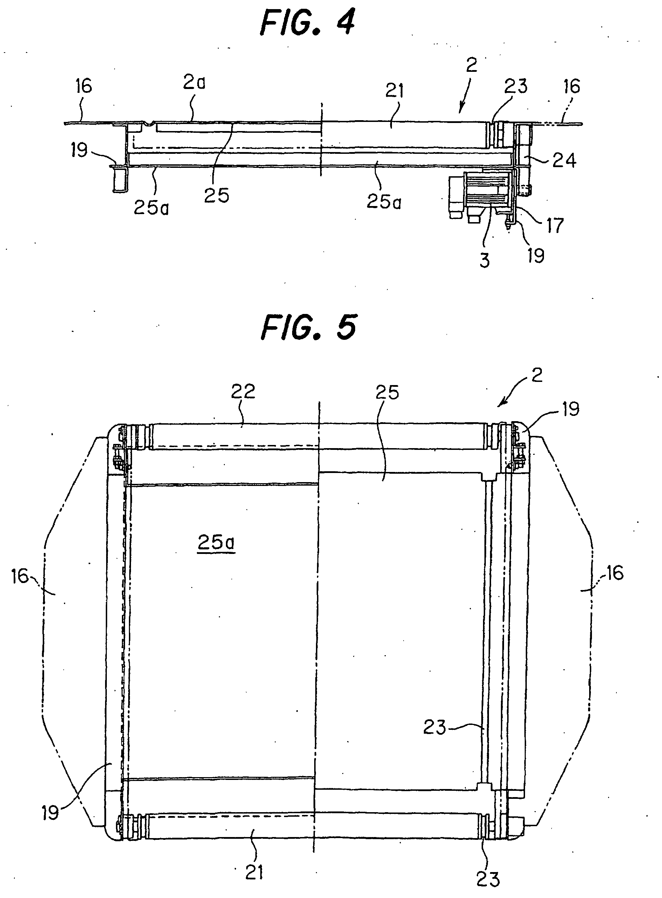

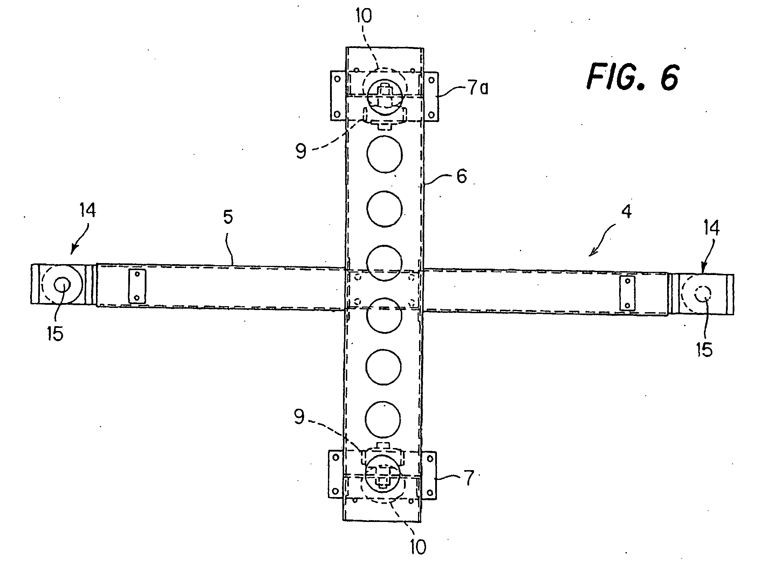

As shown in an enlarged side surface in Fig. 3, in the transporting unit 1, the endless belt conveyor 2 is mounted on a cart 4 which travels along guide rails of the transporting route. The chassis of each cart 4 is comprised of a link 5 connected to the front end and the rear end of the chassis via a connecting unit 14, and a base (or a cross-member) 6 fixed to the centre of the upper part of the link 5 in a direction perpendicular or to the link (Figs. 4, 5). The link 5 is constituted by using a square cylindrical shaped beam so as to withstand the torsion which is generated by the offset load when baggage is loaded onto the transporting unit 1. There is provided a connecting unit 14 at the end of the link 5. A level guide wheel 8 is suspended from a connecting pin 15 that is penetrated through this unit 14 while installation plates 7 are fixed securely adjacent to both ends of the base 6. Brackets 11 are provided with both plates 7 so that travelling wheels 9 and oblique guide wheels 10 are mounted on the plates by using the brackets 11. Further, a generator 18 is mounted onto one bracket 11 (right bracket in Fig. 3) in such a manner that the generator is mounted to have the same axis as that of the travelling wheel 9 of the bracket 11. However, the illustration of the generator 18 is omitted in Figs. 4, 5. In those drawings, reference numeral 25a denotes a lower board installed within a conveyor frame 19.

The level guide wheel 8 comes into contact with a guide rail (centre rail) 12 located at the centre of the travelling route. The travelling wheels 9 come into contact with level guide rails 13 at both sides of the travelling route. In the meantime, the oblique guide wheels 10 come into contact with side rails 13a of the outer side part of the guide rails 13, which are inclined downwardly. With this structure, a coaster type guide wheel is formed in such a manner as to put the guide rail between the travelling wheels 9 and the oblique guide wheels 10 (Fig. 3).

Fig. 4 is a front view of the endless belt conveyor, and Fig. 5 is a plan view of Fig. 4.

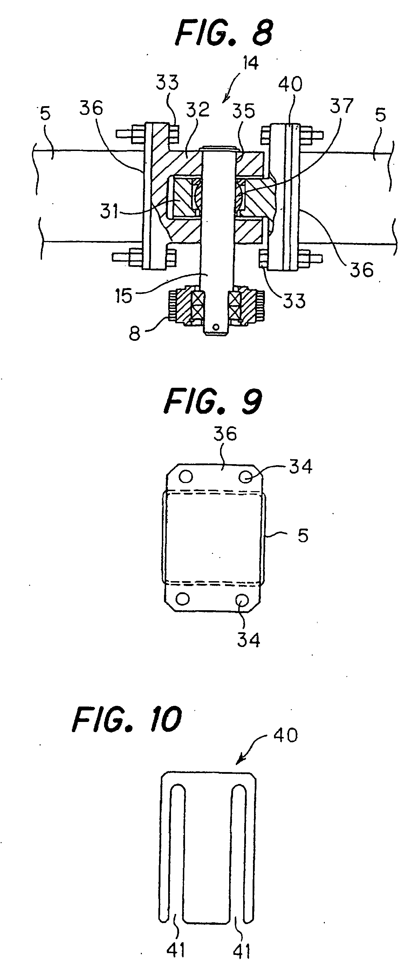

The endless belt conveyor 2 is located between a driving pulley 21 provided at the conveyor frame 19 and a driven pulley 22 so as to be driven by a drive motor 3. There is provided a bracket 17 at one lower part of a conveyor frame 19, and the belt drive motor 3 is mounted thereon. An electric power supply circuit is secured for the belt drive motor 3 in such a manner that the generator 18 is fixed to the other bracket 11 which is located at the other end of the base, 6 is activated to accumulate electricity according to the rotation of the travelling wheel as described previously. When the transporting unit 10 is advanced to a prescribed sorting position, the belt drive motor 3 is activated so as to discharge the baggage (illustration is omitted) to a sorting chute while driving the endless belt 2. The conveyor frame 19 is placed on the link 6 and is fastened securely with a bolt 33 (Fig. 8).

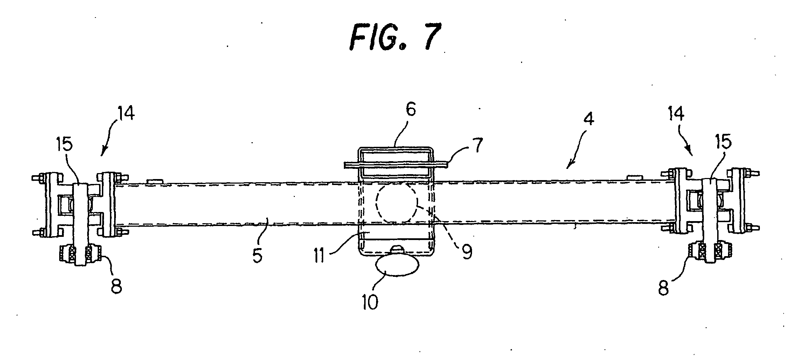

There are provided gap plates 16 (Figs. 1, 2, 4 to 7) part of which overlap each other at the front end and the rear end of the conveyor frame 19 that is located at the upper part of the connecting unit 14 (Figs. 6, 7). Such a structure makes it possible to suppress the pitching that can occur easily at the time when the transporting unit 1 of both right and left travelling wheels (two-wheel supporting) travels, and thereby, vibration or disturbance of the baggage placed on the conveyor can be prevented. Pulleys 21, 22 have a V-groove 23, and there are provided projections (illustration is omitted) adjacent to both right and left ends of the rear surface of a belt 2a to engage the V-groove into the projection so that the meandering of the belt is prevented. Furthermore, a slide head 25 also includes the same V-groove 23 as described above.

The belt driving system is of the friction driving type. The generator 18 employs a technique in which the generator 18 is rotated by directly connecting to the travelling guide rail 13 via the travelling wheel 9, that is, a free roller. When a generator is driven via a timing belt in a conventional manner, at times, there is a risk to damage a timing belt between a wheel and a generator due to the torque at the time when the electric power is generated. When one timing belt is damaged, other timing belts are also damaged subsequently, so that there is possibility to shut down the whole system. On the contrary, the preferred embodiments adopt a direct connecting type electric generator system. Thereby, this provides a stable electric power source for the motor (servo motor) 3 without using such a timing belt.

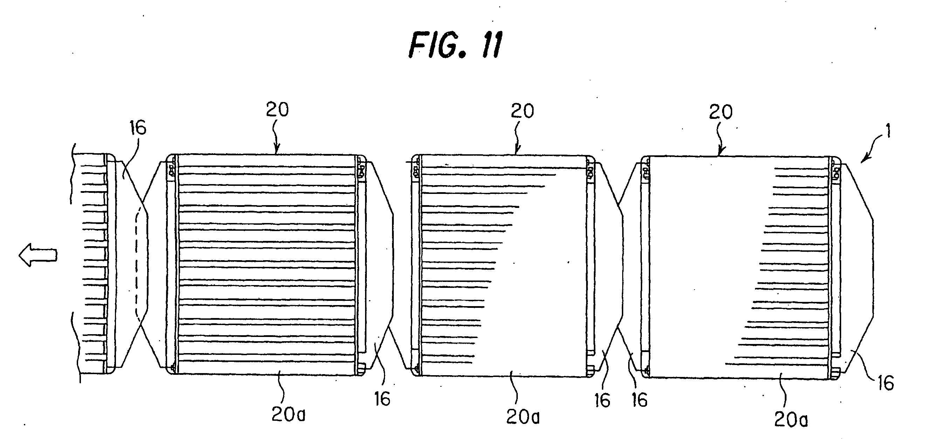

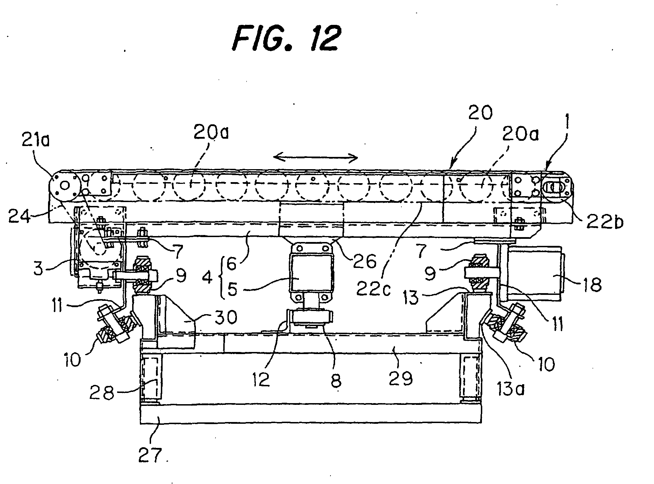

Fig. 8 is an enlarged sectional view of the connecting unit 14 of the link 5. Fig. 9 is an end view of a beam shaped link 5. Fig. 10 is a front view of a spacer. A spacer 40 is detachably inserted at the end part of a link 5 to be assembled into the connecting unit 14 while the connecting unit 14 supports a shaft part of the level guide wheel 8 with a spherical sliding bearing 37 so that the link 5 bends freely in the right and left direction or upward and downward direction so as to correspond any curvature. This connecting unit 14 achieves continuous contacts to the friction drive (Figs. 11, 12) in such a manner that the connecting unit 14 has the same width as the link 5 so that any gaps between the links can be eliminated. In a conventional manner, when such a transporting unit is connected by a general type link, a gap is generated between the links. As a result, travelling noise is produced at a friction drive part. On the contrary, in the present invention, the connecting part between the links is made to have the same width as the link so that the cause of the noise can be dissolved.

As described above, it is possible to restore the link chain easily in such a manner that the spacer 40 is inserted into the connecting part of the link 6 in advance. That is, when the link chain is elongated, the spacer 40 at the prescribed position is removed. In the conventional type conveyor, the link structure cannot cope with the torsion caused by offsetting the load on the conveyor. As a result, vibration and squeak noise are generated depending on the accuracy of the travelling rail, and in some cases, the link is damaged. On the other hand, in the preferred embodiments, the link 5 has employed a square cylindrical shape beam to correspond the torsion so that stable travelling can be performed without being affected by its installation level. In addition to this, as is described later with respect to Fig. 15, according to the preferred embodiments, the cross-belt sorter travels with two travelling wheels 9 along the transporting route. With this structure, it travels smoothly without making noise when it moves, especially, along the circular arc in the curved part whose centre is the focus point 60.

As explained with reference to Figs. 8 to 10, excess spacers 40 for taking up are mounted on a joint part (connecting unit 14) of the link 5. Thereby, it is possible to absorb the elongation of the link 5 in such a manner that the spacer is removed one by one to fasten the link 5 again when the link 5 is elongated. Spacers 40 are inserted between the end face of the connecting link and the connecting unit 14 for the countermeasure for the link chain elongation (for instance, when beam pitch is of 1500 mm, spacer width is of 6 mm). With this structure, when the length of connecting link is elongated, any arbitrary spacer 40 located at the end of the link can be removed so as to restore the link length to the prescribed link length.

Fig. 11 is a plan view of a sorting conveyor comprising a roller conveyor instead of a cross-belt on a transporting unit (a travelling truck) according to a second embodiment of the invention. Fig. 12 is an enlarged side view of the travelling truck shown in Fig. 11. A roller conveyor 20 mounted on the conveyor frame 19 has the same structure as the one shown in Fig. 3. That is, a transmission chain is engaged between a sprocket fixed to an output shaft of the motor 3 which is driven by the power supplied from the generator 18 and a drive sprocket 21a. A chain 22c is engaged between the drive sprocket 21a and the driven sprocket 22a in such a manner that the chain 22c is engaged with a sprocket (not shown) provided at the shaft ends of respective rollers 20a of the conveyor 20. The respective rollers 20a are then rotated by the forward and/or reverse rotation of the motor 3.

In this case, similarly, a large number of transporting units 1 loading the baggage are connected and delivered along the transporting route shaped in the loop in such a manner to drive a roller conveyor 20 mounted on each transporting units 1 in the perpendicular direction of the travelling direction at the sorting position to discharge the baggage.

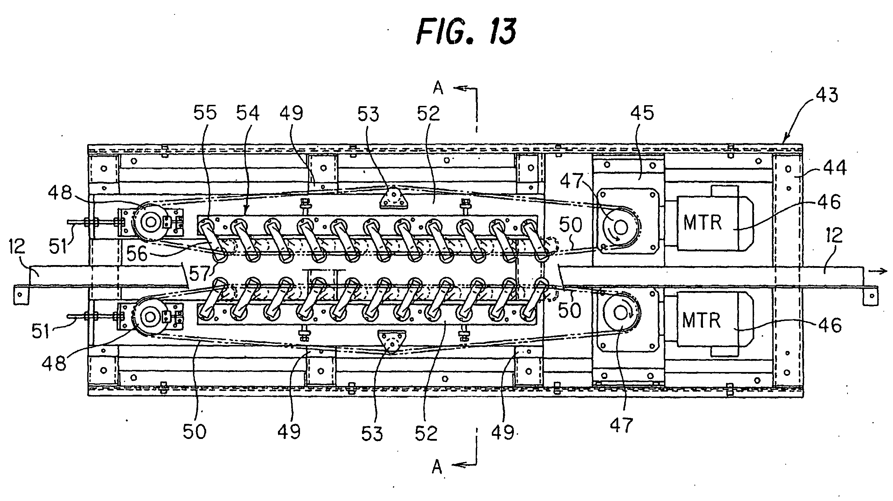

Fig. 13 is a plan view of a drive unit. Fig. 14 is a cross-sectional view cut along line A-A of Fig. 13. The drive unit 43 is provided to move the transporting unit 1. The drive unit 43 comprises a transverse member 45 for supporting the motor and transverse members 49, 49 for supporting a friction belt on the stand 44 so as to fix a centre rail 12 for guiding the guide wheel 8 to the centre in the longitudinal direction of respective supporting members. A pair of motors having reduction gear 46 are arranged on the transverse member 45 in such a manner to pinch the centre rail 12 therebetween. A roller supporting member 52 that is put over the transverse members 49 includes friction belts 50 which are pressed down to both side surfaces of the beam shaped link 5 of the cart. Each friction belt 50 includes a large number of friction rollers 57 for pressing down the forward side of the friction belt 50 to the tip of the arm 56 is fixed onto the shaft of a torsion spring containing a support cylinder 55 in the direction in which the beam side surface is pressure welded. Further, a guide roller 53 for preventing the bound or shake of the friction belt 50 is provided at the return side of the friction belt 50. Further, take-ups 51 for changing the tension to the friction belts 50 are provided at the side of driven pulleys 48.

As described previously, the friction belt is driven while pressing the link side surface so as to eliminate the gap between the friction belts 50 and the link 5 in considering the friction drive. With this structure, when the elongation is occurred in the friction belt 50, it can be adjusted easily by operating the take up 51.

Fig. 15 is a plan view showing the focus point on a curved travelling path of the sorting conveyor comprising the cross-sorter according to the present invention. The guide wheel 8 is arranged to come into contact with the guide rail (centre rail) 12 located on the centre of the transporting route while being suspended from the connecting unit 14 located at the end of the above described beam shaped link. There are provided the coaster type travelling wheel 9, and the guide wheel 10 adjacent both ends of the base 6 so as to come into contact with the guide rails 13, 13a located on both sides of the transporting route. When travelling on the curved part, the travelling wheels travel along a circular excursion whose centre is the focus point 60 of the transporting route.

As apparent from the above explanation referring to the drawings, the right and left two travelling wheels support the transporting unit in such a manner that the travelling wheels are positioned at the focus point of the semicircular centre in the curved part and the link position is made appropriately, so that the transporting unit can travel the curved part smoothly without occurring noise caused by centre deviation, which is unlikely in the conventional techniques. In addition to this, in the curved travelling path of the conventional type cross-belt sorter, travelling units are supported by the travelling wheels 64 at the both ends of a front part of transverse member 63 (Fig. 16). As a result, there occurs deviation in the focus point, which requires many working faces. According to this, the rail and frame are made of sheet metal so that the accuracy is hardly obtained and noise results. In other words, in a conventional conveyor, the wheel position of an endless belt for a transporting unit has not been located in the centre of the lower part of the unit. As a result, the wheel position deviates from the focus point of semicircle, which prevents smooth travelling and causes noise.

As described above, the preferred embodiments provide a sorting conveyor in which a large number of connected transporting units travel on a transporting route shaped in the loop configuration, and the respective transporting units include an endless belt capable of being driven in a direction perpendicular to the travelling direction, in which a belt conveyor or a drive roller conveyor can be driven in the direction perpendicular to the travelling direction of the respective transporting units, said belt conveyor or drive roller conveyor is driven in the cross-direction at the sorting position while electricity is supplied by the generator, which enables the smooth sorting work. There is preferably provided an oblique side rail on the travelling guide rail that is supported by the coaster type wheel, and there are preferably provided two travelling wheels at both ends of the chassis so that the transporting unit travels smoothly along a circular excursion with the focus point as its centre at the time when the transporting unit travels on curved part. With this structure, noise can be eliminated. Moreover, the link may be assembled so as to include a spacer at the connecting part detachably in advance, which makes it possible to adjust the elongation of the link chain easily in such a manner as to attach/detach the spacer to/from the connecting part.

The disclosures in Japanese patent applications no. 2002-351572 and 2003-119464, from which this application claims priority, and in the abstract accompanying this application are incorporated herein by reference.

## Claims

1. A sorting conveyor including a plurality of transporting units (1) connected to travel on a transporting route shaped in a loop so as to drive a conveyor for cross-sorting (2) provided on each transporting unit (1) a sorting position (1a), **characterized by**
said transporting units including a chassis formed with a beam shaped link (5) and a base (6) fixed to the centre of the upper part of the link (5) in a substantially perpendicular direction, wherein the transporting unit (1) is connected at the front end and the rear end of the beam shaped link (5), respectively, and wherein the conveyor for cross-sorting (2) is supported at the upper part of the base (6) in such a manner that the cross-sorting conveyor (2) can be driven reversibly in a direction substantially perpendicular to the travelling direction of the transporting unit (1), and a pair of travelling wheels (9) which are mounted at both ends of the base (6) come into contact with guide rails (13) arranged on both sides of the transporting route, so that while travelling on the curved part of the transporting route, said travelling wheels (9) travel along a substantially circular locus whose centre is a focus point (60) of the curved transporting route.

2. A sorting conveyor according to claim 1, wherein said conveyor for cross-sorting (2) is an endless belt conveyor.

3. A sorting conveyor according to claim 1, wherein said conveyor for cross-sorting (2) is a drive roller conveyor.

4. A sorting conveyor according to any one of claims I to 3, wherein a connecting unit (14) for linking the transporting unit (1) is attached to the front end and rear end of said beam shaped link (5), and a guide level wheel (8) suspended from respective connecting units (14) of said link (5) end so as to travel while coming into contact with a centre rail (13) of the centre of the transporting route.

5. A sorting conveyor according to any one of claims 1 to 4, wherein there are provided level guide rails (13) and oblique side rails (13a) at both sides of said transporting route, wherein the travelling wheels (9) are provided adjacent both sides of the base (6) so as to come into contact with the level guide rails (13), and the coaster shaped guide wheels (10) so as to come into contact with the oblique side rails (13a) in which the guide wheel (10) and the travelling wheel (9) put the rail of a guide member (13) there between so as to associate with one another.

6. A sorting conveyor according to claim 4 or 5 when depending on claim 4, wherein a connecting unit (14) having the same width as said link (5) is assembled so as to insert a spacer (40) at an end part of said link (5) detachably, said connecting unit (14) supports a shaft part (15) of the guide level wheel (8) guided by said centre rail (12) with a spherical sliding bearing (37).

## Patentansprüche

1. Sortierförderer einschließend mehrere Transporteinheiten (1), die miteinander verbunden sind, um auf einem in einer Schleife ausgebildeten Transportweg zu laufen, um einen Förderer zum Quersortieren (2) anzutreiben, der auf jeder Transporteinheit (1) an einer Sortierposition (1a) vorgesehen ist,
**dadurch gekennzeichnet,**
**dass** die Transporteinheiten ein Fahrgestell einschließen, dass mit einer stangenförmigen Verbindung (5) und einer an dem Zentrum des oberen Teils der Verbindung (5) in einer im Wesentlichen senkrechten Richtung befestigten Basis ausgebildet ist, wobei die Transporteinheit (1) an dem Vorderende und dem rückwärtigen Ende der stangenförmigen Verbindung (5) entsprechend angeschlossen ist, und wobei der Förderer zum Quersortieren (2) auf dem oberen Teil der Basis (6) in einer derartigen Weise gelagert ist, dass der quersortierende Förderer (2) in einer Richtung im Wesentlichen senkrecht zur Laufrichtung der Transporteinheit (1) reversibel angetrieben werden kann, und wobei ein Paar von Laufrädern (9), welche an beiden Seiten der Basis (6) befestigt sind, mit Führungsschienen (13) in Kontakt kommen, die auf beiden Seiten des Transportwegs angeordnet sind, sodass während des Laufens auf einem gekrümmten Teil des Transportwegs die Laufräder (9) längs eines im Wesentlichen kreisförmigen geometrischen Ortes laufen, dessen Zentrum ein Brennpunkt (60) des gekrümmten Transportwegs ist.

2. Sortierförderer nach Anspruch 1,
in welchem der Förderer für das Quersortieren (2) ein endloser Gurtförderer ist.

3. Sortierförderer nach Anspruch 1,
in welchem der Förderer für das Quersortieren (2) ein Antriebswalzenförderer ist.

4. Sortierförderer nach einem der Ansprüche 1 bis 3,
in welchem eine Verbindungseinheit (14) zum Verbinden der Transporteinheit (1) am vorderen Ende und am rückwärtigen Ende der stangenförmigen Verbindung (5) angebracht ist und ein waagerechtes Führungsrad (8) von entsprechenden Verbindungseinheiten (14) am Ende der Verbindung (5) herabragt, sodass es läuft, während es mit einer mittleren Schiene (12) des Zentrums des Transportwegs in Kontakt kommt.

5. Sortierförderer nach einem der Ansprüche 1 bis 4,
in welchem waagerechte Führungsschienen (13) und schräge Seitenschienen (13a) auf beiden Seiten des Transportweges vorgesehen sind, wobei die Laufräder (9) benachbart auf beiden Seiten der Basis (6) vorgesehen sind, sodass sie in Kontakt mit den waagerechten Führungsschienen (13) kommen, und die untersetzerförmigen Führungsräder (10) derart vorgesehen sind, dass sie in Kontakt mit den schrägen Seitenschienen (13a) kommen, wobei das Führungsrad (10) und das Laufrad (9) die Schiene eines Führungselementes (13) so zwischen sich nehmen, dass sie einander zugeordnet sind.

6. Sortierförderer nach Anspruch 4 oder nach Anspruch 5, wenn dieser von Anspruch 4 abhängt, in welchem eine Verbindungseinheit (14) mit der gleichen Breite, wie die Verbindung (5) zusammengebaut ist, so dass ein Abstandhalter (40) abnehmbar an einem Endstück von der Verbindung (5) eingeführt werden kann, wobei die Verbindungseinheit (14) einen Wellenteil (15) des waagerechten Führungsrades (8) trägt, das von der mittleren Schiene (12) mit einer Kugel-Gleitlagerung (37) geführt wird.

## Revendications

1. Bande de tri incluant une pluralité d'unités de transport (1) raccordées pour déplacer sur un trajet de transport ayant la forme d'une boucle de façon à entraîner un convoyeur afin d'effectuer un double tri (2) sur chaque unité de transport (1), au niveau d'une position de tri (1a), **caractérisé en ce que**
lesdites unités de transport incluant un châssis constitué avec une pièce de liaison en forme de poutre (5) et une base (6) fixée au centre de la partie supérieure de la pièce de liaison (5) dans une direction sensiblement perpendiculaire, dans laquelle l'unité de transport (1) est raccordée au niveau de l'extrémité avant et l'extrémité arrière de la pièce de liaison en forme de poutre (5), respectivement, et dans laquelle la bande destinée à effectuer un double tri (2) est supportée au niveau de la partie supérieure de la base (6), de telle manière que la bande effectuant un double tri (2) peut être entraînée, inversement, dans une direction sensiblement perpendiculaire à la direction de la translation de l'unité de transport (1) et une paire de galets de translation (9) qui sont montés au niveau des deux extrémités de la base (6) viennent en contact avec des rails de guidage (13), agencés des deux côtés du trajet de transport, de telle sorte que, pendant la translation sur la partie incurvée du trajet de transport, lesdits galets de translation (9) translatent le long d'un lieu sensiblement circulaire, dont le centre est un point de focalisation (60) du trajet de transport incurvé.

2. Bande de tri selon la revendication 1, dans laquelle ladite bande effectuant un double tri (2) est une bande à toile sans fin.

3. Bande de tri selon la revendication 1, dans laquelle ladite bande effectuant un double tri (2) est une bande à rouleau entraîneur.

4. Bande de tri selon l'une quelconque des revendications 1 à 3, dans laquelle une unité de raccordement (14) destinée à relier les unités de transport (1) est fixée sur l'extrémité avant et l'extrémité arrière de ladite pièce de liaison en forme de poutre (5) et un galet de guidage de niveau (8) est suspendu depuis les unités de raccordement (14) de l'extrémité de ladite pièce de liaison (5) de façon à déplacer tout en venant en contact avec un rail central (17) du centre du trajet de transport.

5. Bande de tri selon l'une quelconque des revendications 1 à 4, dans laquelle sont fournis des rails de guidage de niveau (13) et des rails latéraux obliques (13a) des deux côtés dudit trajet de transport, dans laquelle les galets de translation (9) sont fournis près des deux côtés de la base (6), de façon à venir en contact avec les rails de guidage de niveau (13) et les galets de guidage en forme de dessous-de-bouteille (10), de façon à venir en contact avec les rails latéraux obliques (13a), dans laquelle le galet de guidage (10) et le galet de translation (9) placent le rail d'un élément de guidage (13) entre ceux-ci de façon à les associer l'un à l'autre.

6. Bande de tri selon l'une quelconque des revendications 4 ou 5, lorsqu'elle est dépendante de la revendication 4, dans laquelle une unité de raccordement (14) ayant la même largeur que ladite pièce de liaison (5) est assemblée de façon à insérer une entretoise (40) au niveau d'une partie d'extrémité de ladite pièce de liaison (5) de manière détachable, ladite unité de raccordement (14) supporte une partie d'arbre (15) du galet de guidage de niveau (8) guidé par ledit rail central (12) avec un palier coulissant sphérique (37).
